# EUROPÄISCHE PATENTSCHRIFT

(11) **EP 0 719 060 B1**
(45) Veröffentlichungstag und Bekanntmachung des Hinweises auf die Patenterteilung: **28.04.2004**
(21) Anmeldenummer: 95118025.6
(22) Anmeldetag: 16.11.1995
(51) Int. Cl.: H04Q 3/545, H04L 12/40

(54) **Steuerungssystem für Telekommunikations-Anlagen**
Control system for telecommunication installations
Système de commande pour installations de télécommunication

(30) Priorität: 19.12.1994 DE 4446656
(43) Veröffentlichungstag der Anmeldung: 26.06.1996
(73) Patentinhaber: DeTeWe Deutsche Telephonwerke Aktiengesellschaft & Co. KG, 10997 Berlin (DE)
(72) Erfinder: Huhn, Karl-Eckhardt, D-13465 Berlin (DE); Bauer, Hans-Achim, D-21037 Hamburg (DE); Riehm, Nikolaus, D-22359 Hamburg (DE)
(74) Vertreter: Ninnemann, Detlef, Dipl.-Ing.

(56) Entgegenhaltungen:
- WO-A-93/02511
- US-A- 4 635 192
- US-A- 4 791 639
- "AUTOMATISCHES DAISY-CHAIN" ELEKTRO-ANZEIGER, Bd. 46, Nr. 9, 1. September 1993 (1993-09-01), Seite 62/63 XP000568913

## Beschreibung

Die Erfindung betrifft ein Bus-System für aus Modulen zusammengesetzte Telekommunikations-Anlagen.

Flexible Steuerungssysteme, z. B. in Telekommunikations-Anlagen, werden nach dem Stand der Technik heute allgemein in hierarchisch gestaffelten Rechnerarchitekturen realisiert. Hierbei werden für die verschiedenen Anforderungen an unterschiedliche Telekommunikationsnetze entsprechende Peripherieeinheiten von einem Rechner angesteuert. Die physikalische Realisierung eines solchen Steuerrechners mit seinen Peripherieeinheiten ist allgemein durch die Anforderungen vorgegeben und besteht aus einem Rahmen mit festen Steckplätzen für Steuereinheit und Peripherieeinheiten.

Ein derartiges Steuerungssystem ist aus der US-A-4 635 192 bekannt und besteht aus einem Bussystem mit variablen Steuer- und Peripherieeinheiten für Telekommunikationsanlagen mit festen Steckplätzen, einem zentralen Kontroll- und Datenbus sowie peripheren Kontroll- und Datenbussen, die durch den Einsatz von Peripheriesteuerungen in mehrere Steuerabschnitte unterteilt sind, in denen eine von der Kapazität der Peripheriesteuerungen und dem Steuerleistungsbedarf bzw. dem Komplexitätsfaktor der Peripherieeinheiten abhängige Anzahl von Peripherieeinheiten jeweils einer Peripheriesteuerung zugeordnet ist.

Durch Unterschiede in der Komplexität der Kanalkapazität und der Bestückungsdichte der Peripherieeinheiten können dem dazugehörigen Steuerrechner mehr oder weniger viele Peripherieeinheiten zugeordnet werden.

Die bisher bekannten festen Konfigurationen haben den Nachteil, daß entweder der Steuerrechner auf die maximale Kapazität der im Rahmen steckbaren Peripherieeinheiten ausgelegt sein muß, oder bei geringerer Auslegung Steckplätze frei bleiben müssen, wenn die Steuerkapazität erschöpft ist. Hierdurch sind im System Vorleistungen erforderlich, die je nach Konfiguration nicht genutzt werden. Bei einigen Systemen wird die Konfiguration auch durch manuelle Einstellung über Schalter oder über Software vor der Inbetriebnahme vorgenommen, was wiederum zu einem erhöhten Aufwand an Hardware, Software und Serviceleistungen und damit zu möglichen Fehlern führt.

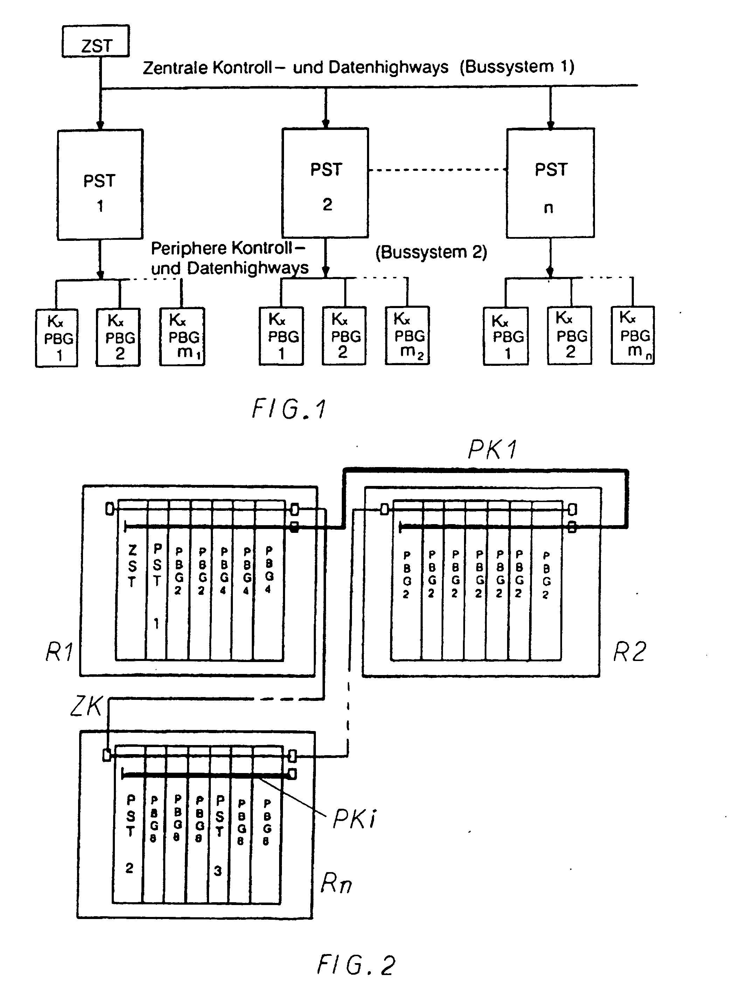

Solche Steuerungssysteme sind hierarchisch gestaffelt, wie in Figur 1 dargestellt. Sie weisen mindestens zwei Kommunikationsebenen auf. Diese sind allgemein als Bus-Systeme realisiert, die Kontroll- und Dateninformationen zwischen den einzelnen Komponenten führen. Dabei befindet sich ein Bus-System auf der Ebene der Steuerrechner (Zentralsteuerung ZST, Peripheriesteuerung PST) und ein weiteres zwischen den Steuerrechnern und den hiervon gesteuerten Komponenten (Peripherieeinheiten PBG), deren Komplexitätsfaktor (K) die Resourcenanforderung an die Peripheriesteuerung definiert. Dabei muß die Summe der Komplexitätsfaktoren der Peripherieeinheiten einer Peripheriesteuerung kleiner oder maximal gleich der Resourcenkapazität dieser Peripheriesteuerung sein.

Das Bus-System auf der Steuerrechnerebene, die zentralen Kontroll- und Daten-Highways stellen die Kommunikation zwischen zentralen und peripheren Steuereinheiten sicher. Die Peripherieeinheiten PBG werden über periphere Kontroll- und Daten-Highways angesteuert. Zur Bildung von flexiblen Steuerungssystemen mit peripheren Komponenten extrem unterschiedlicher Komplexität, z. B. in der Telekommunikation die analoge Technik mit kleiner Kanalkapazität und die digitale Technik mit großer Kanalkapazität, ist es erforderlich, die Anzahl der Peripherieeinheiten, die von einem Peripheriesteuerrechner kontrolliert werden, variabel zu halten. Diese Variabilität erfordert von den Peripheriesteuerungen, von den peripheren Kontroll- und Daten-Highways und von den Peripherieeinheiten ein flexibles Zusammenwirken derart, daß innerhalb eines gegebenen Rahmens zur Aufnahme der Steuer- und Peripherieeinheiten diese in beliebigen Gruppierungen zusammenarbeiten können.

Aufgabe der vorliegenden Erfindung ist es, ein Bus-System zu schaffen, das eine flexible Steuerung und Anordnung einer variablen Anzahl Peripherieeinheiten mit unterschiedlicher Komplexität und unterschiedlicher Kapazität der Peripheriesteuerungen ermöglicht.

Diese Aufgabe ist durch die Erfindung gelöst, wie sie im Patentanspruch 1 dargelegt ist. Weitere vorteilhafte Maßnahmen sind Gegenstand der Unteransprüche.

Nach der Erfindung werden die Bus-Systeme im vorgegebenen Rahmen derart adressiert und geführt, daß Steuerrechner und Peripherieeinheiten in weiten Bereichen variabel gemischt betrieben werden können. Ein Steuerrechner mit seinen Peripherieeinheiten bildet dabei einen eigenen Steuerabschnitt. Dieser wird automatisch durch Stecken des Steuerrechners und der Peripherieeinheiten gebildet. Jede weitere Steuereinheit bildet mit ihren Peripherieeinheiten einen neuen Steuerabschnitt. Der Steuerabschnitt kann dabei über die Grenzen des Rahmens auf weitere Rahmen ausgedehnt werden. Somit können Steuerrechner und Peripherieeinheiten jeweils optimal angepaßt werden.

Die Erfindung wird nachfolgend anhand einer aus sechs Figuren bestehenden Zeichnung näher erläutert. Darin zeigt die
- Fig. 1: eine hierarchische gestaffelte Rechnerarchitektur mit zwei Bus-Systemen, wie eingangs beschrieben, die
- Fig. 2: eine flexible Zuordnung von Steuerrechnern zu Peripherieeinheiten, die
- Fig. 3: eine schematische Rückwandschnittstelle, die
- Fig. 4: das Beispiel einer Telekommunikations-Anlage mit sechs Modulen, die
- Fig. 5: das Beispiel einer Bus-Führung auf einer Rückwand mit sieben Steckplätzen und die
- Fig. 6: die Zusammenschaltung zweier Rückwände.

Die flexible Zuordnung von Steuerrechnern zu peripheren Einheiten ist am Beispiel einer Telekommunikations-Anlage in der Figur 2 dargestellt. Die Anlage besteht beispielsweise aus n Modulen R1...Rn. Ein zentraler Kontroll- und Datenbus ZK verbindet sämtliche Module R1 bis Rn, während periphere Kontroll- und Datenbusse PK über einen oder mehrere Module R geführt sind. Jedes Modul R weist Peripherieeinheiten PBG unterschiedlicher Komplexität auf. So sind im Beispiel Peripherieeinheiten PBG2, PBG4 und PBG8 mit jeweils 2, 4 oder 8 Signalisierungs- und Nutzkanälen dargestellt. Die Peripheriesteuerung PST1 des ersten Moduls R1 steuert die Peripherieeinheiten PBG2 und PBG4 des ersten und des zweiten Moduls R1, R2 über den zugeordneten peripheren Kontroll- und Datenbus PK1. Die Peripheriesteuerung PST2 und PST3 des Moduls Rn steuern die jeweils nachgeordneten Peripherieinheiten PBG8 über den peripheren Kontroll- und Datenbus PKi.

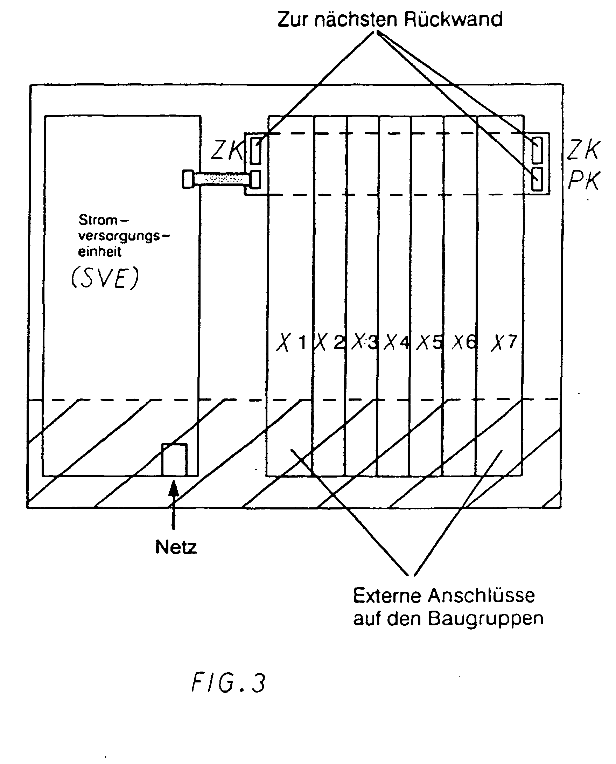

Als Bindeglied zwischen den Steuerrechnern ZST, PST und den Peripherieeinheiten PBG dienen Rückwandschnittstellen der Module R gemäß dem Schema nach der Figur 3. Jede Rückwandschnittstelle verbindet die Steckplätze, z. B. X1...X7, mit der Spannungsversorgungseinheit, den zentralen Kontroll- und Datenbussen ZK und den peripheren Kontroll- und Datenbussen PK.

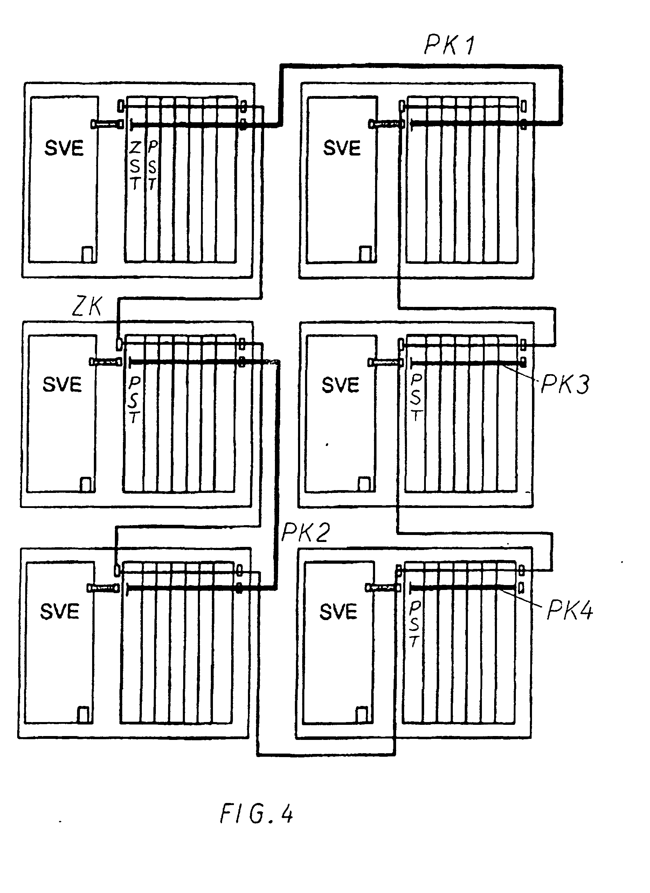

In der Figur 4 ist das Beispiel einer Telekommunikations-Anlage mit sechs Modulen dargestellt. Die zentralen Kontrollund Datenbusse ZK, vorzugsweise PCM-Busse und Takte werden über sämtliche Module geführt. Dabei wird jeweils der rechte Steckanschluß einer Rückwandschnittstelle gemäß Figur 3 mit dem linken Steckanschluß der Rückwandschnittstelle des nächsten Moduls verbunden.

Die peripheren Kontroll- und Datenbusse PK, vorzugsweise IOM-2-Busse und Takte, werden im Beispiel maximal über zwei Module geführt. Im gezeigten Beispiel der Figur 4 werden die peripheren Kontroll- und Datenbusse PK1 und PK2 über zwei Module geführt. Von den 14 Steckplätzen der zwei Module nimmt z. B. der Steuerrechner PST einen Steckplatz ein. Somit können von diesem Steuerrechner PST bis zu 13 Peripherieeinheiten PBG gesteuert werden.

Eine Rückwand kann somit modulübergreifend mit einer benachbarten Rückwand zusammengeschaltet werden. Insgesamt sind in diesem Beispiel 6 Module neben- und untereinander angeordnet zu einem Telekommunikationssystem zusammengeschaltet. Das periphere Bus-System PK ist von einer Rückwand auf eine benachbarte Rückwand weitergeführt. Hierzu wird ein entsprechendes Kabel zwischen beiden Rückwänden jeweils an gleicher Stelle gesteckt. Das zentrale Bus-System ZK wird von Modul zu Modul durchgeführt.

Die peripheren Kontroll- und Datenbusse PK werden in einer dem Komplexitätsfaktor der Peripherieeinheiten und der Kapazität der Busse entsprechenden Weise geführt. Diese Führung geschieht derart, daß die Summe der Komplexitätsfaktoren der Peripherieeinheiten die Kapazität jedes einzelnen Busses nicht überschreitet. Die Führung konkreter Bus-Systeme ist daher abhängig von der Anzahl der Busse im Bus-System, der Kapazität eines Busses, der Kapazität der Peripheriesteuerung PST und dem Komplexitätsfaktor der Peripherieeinheiten PBG. Im nachfolgenden Beispiel beträgt die Anzahl der Busse im Bus-System n = 4, die Kapazität eines Busses m = 16 Einheiten, die Komplexitätsfaktoren der Peripherieeinheiten K1 = 2, K2 = 4, K3 = 8, und die Komplexitätskapazität der Peripheriesteuerung beträgt 32 Einheiten. Diese Angaben sind beispielhaft und resultieren aus Beschränkungen in den Systemen derzeitiger technischer Ausprägung, wie Chipfläche, Taktrate, Größe der Peripherieeinheiten, Rechnerausführung usw.

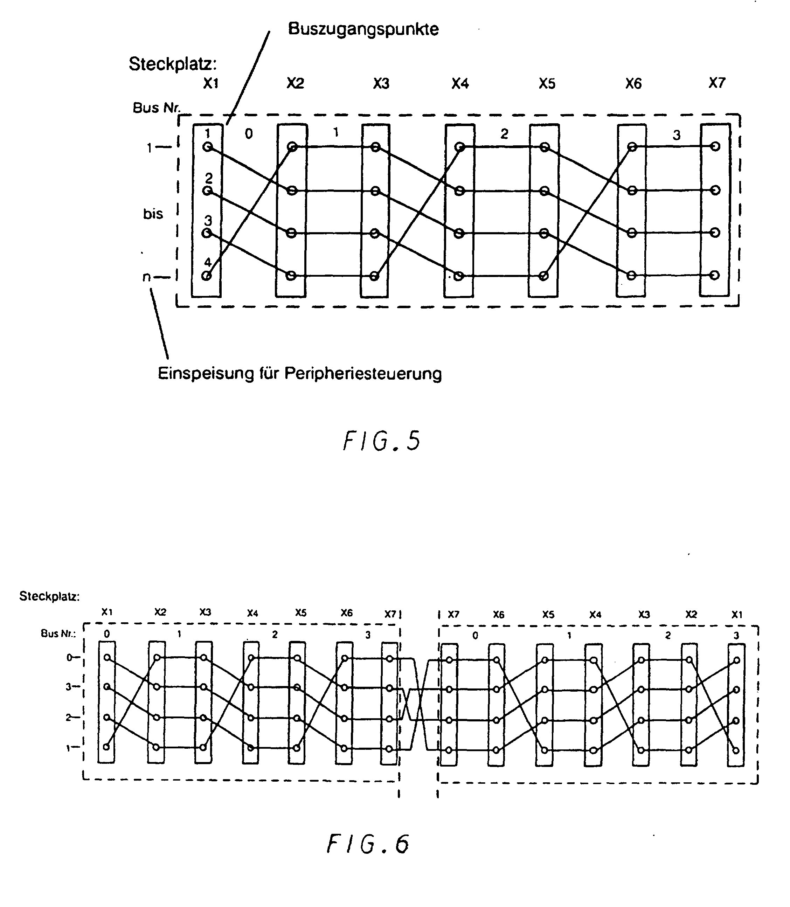

Die Rückwand eines Moduls führt die 4 Busse in der in Figur 5 gezeigten Weise wendelartig, wodurch erreicht wird, daß jeweils zwei nebeneinander liegende Steckplätze, z. B. X2 und X3, denselben Bus, z. B. Nr. 1, zugeführt bekommen.

Durch die Wahl der Adressierung der Bus-Teilnehmer können Peripherieeinheiten PBG mit Komplexitätsfaktoren 2, 4 oder 8 beliebig gemischt von einem Peripheriesteuerrechner bedient werden. Das Bus-System wird für Peripherieeinheiten mit Komplexitätsfaktoren 2 und 4 über maximal 2 Rückwände geführt.

Die wendelartige Führung gestattet eine freizügige Bestückung unterschiedlicher Peripherieeinheiten auf den Modulen.

Der Zugang zu den peripheren Kontroll- und Datenbussen ist durch eine entsprechende Belegung der Bezugspunkte der Rückwandsteckplätze gesichert.

Die im Beispiel genannten 4 Busse eines Bus-Systems, die von der Peripheriesteuerung PST ausgehen, werden derart auf die Bus-Zugangspunkte gelegt, daß sie in der Reihenfolge ihrer Nummer auf den Steckplätzen, die dem steuernden Rechner der Peripheriesteuerung PST folgen, erscheinen. In der Figur 5 sind dies die Bus-Nummern 0 bis 3 auf den Steckplätzen X1 bis X7 in Folge. Die Peripherieeinheiten PBG werden mit ihrem Bus-Anschluß jeweils auf den Bus-Zugangspunkt 1 geführt, während die Bus-Zugangspunkte 2 bis 4 auf den Peripherieeinheiten nicht beschaltet werden.

Um die im vorgenannten Beispiel angeführte Komplexitätskapazität von 32 Einheiten der Peripheriesteuerung bei Peripherieeinheiten mit Komplexitätsfaktoren 2 und 4 zu erzielen, sind zwei Rückwände zu einer Bus-Einheit zusammen zu schalten (Figur 6). Die Bus-Führung und Bus-Adressierung der Peripherieeinheiten wird dabei über eine Rückwand hinaus so weitergeführt, daß für alle adressierbaren Peripherieeinheiten eine eindeutige, auf der Rückwand fest vorgegebene Adreßzuordnung auf dem Bus stattfindet. Hierzu ist es erforderlich, die Busse von einer Rückwand so zur nächsten Rückwand zu führen, daß die Busse auf dieser an den Zugangspunkten mit fortschreitender Bus-Nummer erscheinen. Wie in der Figur 2 bzw. 4 dargestellt, werden die Rückwände zweier Module jeweils an der gleichen Seite durch Kabel miteinander verbunden. Da diese Seiten spiegelsymmetrisch identisch sind, ergibt sich bei der Zusammenschaltung der Rückwände die in der Figur 6 dargestellt Bus-Führung und Bus-Adressierung.

Hierbei ist zu beachten, daß in einem verlängerten Bus-Abschnitt keine Peripherieeinheiten mit einem Komplexitätsfaktor 8 gesteckt werden dürfen, da dies zu Adressenkonflikten führt.

Die Führung der Busse und der zugeordneten Takte zwischen zwei Module geschieht über ein Kabel an beiden Enden der Steckverbindungen der Rückwandschnittstellen nach Figur 3, wobei die Verbindung der Bus-Zugangspunkte gekreuzt wird. In der Figur 6 ist dies durch die Verbindung zwischen den Steckerplätzen X7 der Module dargestellt.

Zur Adressierung der Bus-Teilnehmer stehen auf der Rückwand zwei Adreßpins mit unterschiedlichen Kodierungen je Steckplatz zur Verfügung. Die Adressen sind so gewählt, daß von einer Steuereinheit auf zum Beispiel dem Steckplatz X1 der ersten Rückwand, bei den in den Figuren 2 bis 6 dargestellten Beispielen mit jeweils 7 Steckerplätzen, 6 Peripherieeinheiten mit Komplexitätsfaktor 2, 4 oder 8 in beliebiger Mischung betrieben werden können. Eine Erweiterung durch eine zweite Rückwand erlaubt dann eine Steuerung weiterer 7 Peripherieeinheiten mit dem Komplexitätsfaktor 2 und 4.

Zur Übernahme des Bus-Systems durch eine weitere Peripheriesteuerung PST dient eine spezielle Logik. In einem Bus-System richtet sich die Anzahl der Steckplätze nach der Leistung der zentralen und peripheren Steuereinheiten und dem Steuerleistungsbedarf der Peripherieeinheiten. Ist die Anzahl der vorhandenen Steckplätze für Einheiten mit geringem Steuerleistungsbedarf ausgelegt, bleiben zwangsläufig Steckplätze frei, wenn Einheiten mit höherer Steuerlast zum Einsatz kommen. In diesem Fall ist es vorteilhaft, das Bus-System aufzutrennen, um einen weiteren Steuerabschnitt zu erhalten. Somit sind vorhandene freie Steckplätze verwendbar.

Das Auftrennen von Bus-Leitungen geschieht automatisch durch das Stecken einer neuen Steuereinheit. Beispielsweise besteht ein Bus-System aus Y Steckplätzen. Den ersten Steckplatz besetzt eine Steuereinheit, die aufgrund der hohen Steuerlast nur z. B. 3 Peripherieeinheiten steuert. Somit sind die folgenden Steckplätze 5 bis Y unbelegt. Wird nun auf dem ersten freien Steckplatz eine weitere Steuereinheit positioniert, können die Steckplätze 6 bis Y mit neuen zu steuernden Peripherieeinheiten belegt werden. Dazu ist das Bus-System zwischen den Steckplätzen 4 und 5 aufzutrennen, damit es zwischen den beiden Steuerabschnitten zu keiner Kollision kommt. Diese automatische Trennstelle wird mit einem elektronischen Schalter und einer dazu gehörenden Steuerleitung, die eine Verbindung zu den Bus-Systemsteckern hat, realisiert.

Im Normalzustand ist dieser elektronische Schalter geschlossen, so daß das Bus-System über alle Steckplätze geführt wird. Nach Definition hat nur eine Steuereinheit, z. B eine Peripheriesteuerung PST, den Zugang zu der Steuerleitung des elektronischen Schalters. Durch Stecken einer solchen Steuereinheit ist das Potential auf der Steuerleitung veränderbar und der elektronische Schalter öffnet.

Dieses Verfahren eignet sich nicht nur für das Trennen sondern auch für das Verlängern von Bus-Systemen. Es ist Gegenstand der Patentanmeldung DE 44 31 416.7.

Die Leitungsenden eines Bus-Systems sind allgemein mit Abschlußwiderständen versehen. Wird ein Bus-System aus mehreren Modulen zusammengestellt, z. B. nach Figur 6, wobei jedes Bus-Systemmodul an den Leitungsenden Abschlußwiderstände besitzt, werden durch den Einsatz von elektronischen Schaltern die Abschlußwiderstände aktiviert oder deaktiviert. Das Steuern dieser elektronischen Schalter geschieht in gleicher Weise, wie bei den Steuereinheiten über die Steckverbindung der Bus-Systemmodule.

## Patentansprüche

1. Bus-System für aus Modulen zusammengesetzte Telekommunikations-Anlagen mit einem sämtliche Module (R1, R2, Rn) verbindenden zentralen Kontroll- und Datenbus (ZK) und peripheren Kontroll- und Datenbussen (PK1, PKi), die Peripheriesteuerungen (PST1, PST2, PST3) mit Peripherieeinheiten (PBG) verbinden, wobei die Peripheriesteuerungen (PST1, PST2, PST3) jeweils einen eigenen Steuerrechner für die zugeordneten Peripherieeinheiten (PBG) aufweisen und die peripheren Kontroll- und Datenbusse (PK1, PKi) in Steuerabschnitte unterteilt sind, in denen eine von der Kapazität der Peripheriesteuerungen (PST1, PST2, PST3) und dem Steuerleistungsbedarf bzw. Komplexitätsfaktor der Peripherieeinheiten (PBG) abhängige Anzahl von Peripherieeinheiten (PBG) jeweils einer Peripheriesteuerung (PST1, PST2, PST3) zugeordnet ist,
**dadurch gekennzeichnet,**
**dass** die Module (R1, R2, Rn) einen Rahmen und feste Steckplätze für die Peripheriesteuerungen (PST1, PST2, PST3) und die Peripherieeinheiten (PBG) aufweisen,
**dass** die peripheren Kontroll- und Datenbusse (PK1, PKi) innerhalb eines Moduls (R1, R2, Rn) und/oder modulübergreifend ausgebildet und wendelartig in den Rückwänden der Module (R1, R2, Rn) geführt sind,
und **dass** jeweils ein peripherer Kontroll- und Datenbus (PK1, PKi) für eine bestimmte Anzahl von Steckplätzen an einen für alle Steckplätze vorbestimmten Steckerpunkt eines Moduls (R1, R2, Rn) geführt ist.

2. Bus-System nach Anspruch 1, **dadurch gekennzeichnet, daß** mindestens ein peripherer Kontroll- und Datenbus (PK1, PKi) modulübergreifend ausgebildet und zwischen Schnittstellen an den Rückwänden der Module (R1, R2, Rn) gekreuzt geführt ist, und dass die Peripherieeinheiten (PBG) und die zugehörige Peripheriesteuerung (PST1, PST2, PST3) in unterschiedlichen Modulen (R1, R2, Rn) angeordnet sind.

3. Bus-System nach Anspruch 1 oder 2, **gekennzeichnet durch** ein automatisches Auftrennen eines peripheren Kontrollund Datenbusses (PK1, PKi) beim Einfügen einer weiteren Periphiesteuerung (PST) in einen Steckplatz eines Moduls (R1, R2, Rn)

## Claims

1. Bus-system for telecommunications installations composed of modules, comprising a central control and data bus (ZK) connecting all modules (R1, R2, Rn) and peripheral control and data buses (PK1, PKi), which connect peripheral controllers (PST1, PST2, PST3) to peripheral units (PBG), the peripheral controllers (PST1, PST2, PST3) each comprising their own control computer for the associated peripheral units (PBG) and the peripheral control and data buses (PK1, PKi) being divided into control portions in which a number of peripheral units (PBG) dependent on the capacity of the peripheral controllers (PST1, PST2, PST3) and the control power requirement or complexity factor of the peripheral units (PBG) is associated with a respective peripheral controller (PST1, PST2, PST3),
**characterised in that**
the modules (R1, R2, Rn) comprise a frame and fixed slots for the peripheral controllers (PST1, PST2, PST3) and the peripheral units (PBG), **in that** the peripheral control and data buses (PK1, PKi) are constructed within one module (R1, R2, Rn) and/or so as to overlap modules and are guided helically into the back walls of the modules (R1, R2, Rn), and **in that** a respective peripheral control and data bus (PK1, PKi) for a certain number of slots is guided to a connector point of a module (R1, R2, Rn) intended for all slots.

2. Bus-system according to claim 1, **characterised in that** at least one peripheral control and data bus (PK1, PKi) is designed so as to overlap modules and is guided crosswise between interfaces on the back walls of the modules (R1, R2, Rn), and **in that** the peripheral units (PBG) and the associated peripheral controller (PST1, PST2, PST3) are arranged in different modules (R1, R2, Rn).

3. Bus-system according to claim 1 or 2, **characterised by** automatic separation of a peripheral control and data bus (PK1, PKi) when a further peripheral controller (PST) is inserted in a slot of a module (R1, R2, Rn).

## Revendications

1. Système de bus pour des installations de télécommunication composées de modules avec des bus de données et de contrôle central (ZK) reliant tous les modules (R1, R2, Rn) et des bus de données et de contrôle périphériques (PK1, PKi) qui relient les commandes périphériques (PST1, PST2, PST3) aux unités périphériques (PBG), dans lequel les commandes périphériques (PST1, PST2,PST3) présentent respectivement un ordinateur de commande propre pour les unités périphériques affectées, et les bus de données et de contrôle périphériques (PK1, PKi) sont divisés en sections de commande dans lesquelles un certain nombre d'unités périphériques (PBG) fonction de la capacité des commandes périphériques (PST1, PST2, PST3) et des besoins en puissance de commande ou du facteur de complexité des unités périphériques (PBG) est respectivement affecté à une commande périphérique (PST1, PST2, PST3),
**caractérisé en ce que**,
les modules (R1, R2, Rn) présentent un châssis et des places enfichables pour les commandes périphériques (PST1, PST2, PST3) et les unités périphériques (PBG),
**en ce que** les bus de données et de contrôle périphériques (PK1, PKi) sont formés à l'intérieur d'un module (R1, R2, Rn) et/ou en l'emprisonnant par le dessus et sont guidés en colimaçon dans les parois arrière des modules (R1, R2, Rn),
et **en ce que** respectivement un bus de données et de contrôle périphérique (PK1, Pki) pour un nombre déterminé de places enfichables est guidé sur un point enfichable prédéterminé d'un module (R1, R2, Rn) pour toutes les places enfichables.

2. Système de bus selon la revendication 1, **caractérisé en ce qu'**au moins un bus de données et de contrôle périphérique (PK1, PKi) est formé de façon à emprisonner le module par le dessus et est guidé de façon croisée entre des interfaces sur les parois arrière des modules (R1, R2, Rn) et **en ce que** les unités périphériques (PBG) et la commande périphérique correspondante (PST1, PST2, PST 3) sont disposés dans différents modules (R1, R2, Rn).

3. Système de bus selon la revendication 1 ou 2, **caractérisé par** une séparation automatique d'un bus de données et de contrôle périphérique (PK1, PK2) lors de l'insertion d'une autre commande périphérique (PST) dans une place enfichable d'un module (R1, R2, Rn).
